# EUROPÄISCHE PATENTSCHRIFT

(11) **EP 1 871 198 B1**
(45) Veröffentlichungstag und Bekanntmachung des Hinweises auf die Patenterteilung: **26.08.2009**
(21) Anmeldenummer: 06723943.4
(22) Anmeldetag: 31.03.2006
(51) Int. Cl.: A47C 7/46, B60N 2/44

(54) **VORRICHTUNG UND VERFAHREN ZUM VERSTELLEN EINER SEITENWANGE EINES SITZES**
DEVICE AND METHOD FOR REGULATING A LATERAL PART OF A SEAT
DISPOSITIF ET PROCEDE POUR REGLER UNE JOUE LATERALE D'UN SIEGE

(30) Priorität: 08.04.2005 DE 102005016475
(43) Veröffentlichungstag der Anmeldung: 02.01.2008
(73) Patentinhaber: Schukra Gerätebau AG, 2560 Berndorf (AT)
(72) Erfinder: STÖSSEL, Veit, 90409 Nürnberg (DE); SCHINDLEGGER, Walter, A-3353 Seitenstetten (AT)
(74) Vertreter: Banzer, Hans-Jörg
(86) Internationale Anmeldenummer: PCT/EP2006/002983
(87) Internationale Veröffentlichungsnummer: WO 2006/105915

(56) Entgegenhaltungen:
- EP-A- 1 354 538
- DE-A1- 10 057 449
- US-A- 4 938 529
- US-A1- 2005 046 253

## Beschreibung

Die vorliegende Erfindung betrifft eine Vorrichtung sowie ein Verfahren zum Verstellen einer Seitenwange eines Sitzes, insbesondere eines Kraftfahrzeugsitzes, und einen entsprechenden Sitz.

Seitenwangen kommen bei einer Vielzahl von Kraftfahrzeugsitzen zur Anwendung, beispielsweise bei Sportsitzen, um einer auf einem Sitz sitzenden Person zusätzlichen seitlichen Halt zu vermitteln. Insbesondere bei dem Durchfahren einer Kurve werden auf den Sitzinsassen wirkende Inertialkräfte wirksam von den Seitenwangen aufgenommen, um so zu verhindern, dass sich die Person seitlich relativ zu dem Sitz bewegt. Zu diesem Zweck sind Seitenwangen vorzugsweise an den seitlichen Rändern einer Rückenlehne des jeweiligen Sitzes angeordnet, um seitliche Stützflächen für den Oberkörper der auf dem Sitz sitzenden Person bereitzustellen. Viele Sitzlehnen bieten jedoch nur einen geringen Seitenhalt, da Fahrzeugsitze häufig derart konstruiert sind, dass sie für Fahrzeuginsassen mit verschiedenen Körpergrößen geeignet sind, und Seitenwangen deswegen häufig weit außen an den Rückenlehnen angeordnet sind.

Um die Seitenwangen individuell an die Größe der jeweils auf dem Sitz sitzenden Person anpassen zu können, sind verstellbare Seitenwangen entwickelt worden. Verschiedene Vorrichtungen zum Verstellen von Seitenwangen sind aus der Technik bekannt, beispielsweise eine elektromechanische oder eine pneumatische Verstellvorrichtungen, wie sie beispielsweise in der DE 199 10 082 C1 offenbart ist.

Eine gattungsgemäße Verstellvorrichtung für eine Seitenwange ist aus der EP-A 1354538 bekannt.

Ein gattungsgemäßes Verfahren zum Verstellen einer Seitenwange ist aus der DE-A-10057449 bekannt.

Aus der Technik bekannte Verstellvorrichtungen für Seitenwangen weisen das Problem auf, dass insbesondere bei einer Verstellung durch Luftpolster mehr die Lehnenkontur verändert als die Lehnenbreite verstellt wird. Darüber hinaus ist der Bauraum von herkömmlichen Verstellvorrichtungen für Sitzwangen häufig verhältnismäßig groß. Insbesondere aufgrund der Integration einer immer größer werdenden Anzahl verschiedener Funktionalitäten in Kraftfahrzeugsitze steigt das Bedürfnis, den Bauraum für die einzelnen im Sitz unterzubringenden Einrichtungen zu verringern. Somit besteht in der Technik ein Bedarf an einer Verstellvorrichtung für eine Seitenwange eines Sitzes, welche ein kompaktes Design aufweist.

Darüber hinaus sind die bei bekannten Sitzen zum Einsatz kommenden Seitenwangen häufig nicht geeignet, um bei starken seitlichen Kräften, beispielsweise während des Durchfahrens einer Kurve mit hoher Geschwindigkeit, dem Fahrer einen ausreichenden seitlichen Halt zu bieten.

Der vorliegenden Erfindung liegt daher die Aufgabe zugrunde, eine verbesserte Verstellvorrichtung für eine Seitenwange eines Sitzes, ein verbessertes Verfahren zum Verstellen einer Seitenwange eines Sitzes, sowie einen Sitz mit einer verbesserten Seitenwangen-Verstellvorrichtung bereitzustellen. Insbesondere liegt der vorliegenden Erfindung die Aufgabe zugrunde, eine Verstellvorrichtung für eine Seitenwange eines Sitzes bereitzustellen, welche ein flaches Design aufweist und es bevorzugt ermöglicht, einer auf dem Sitz sitzenden Person einen verbesserten Seitenhalt zu bieten.

Diese Aufgabe wird erfindungsgemäß durch eine Verstellvorrichtung für eine Seitenwange eines Sitzes nach Anspruch 1 und ein Verfahren zum Verstellen einer Seitenwange eines Sitzes nach Anspruch 19 gelöst. Die abhängigen Ansprüche definieren bevorzugte oder vorteilhafte Ausführungsbeispiele der vorliegenden Erfindung.

Eine erfindungsgemäße Verstellvorrichtung für eine Seitenwange eines Sitzes umfasst ein mit der Seitenwange zu koppelndes Biegeelement. Die Wölbung des Biegeelements ist durch Ausüben einer Kraft auf das Biegeelement reversibel änderbar, um die Seitenwange in Abhängigkeit von der Wölbung des Biegeelements zu verstellen. Zum Ausüben einer Kraft auf das Biegeelement ist das Biegeelement im Gebrauch mit eines. Betätigungseinrichtung zu koppeln. Da bei der erfindungsgemäßen Verstellvorrichtung die Seitenwange gemäß der Wölbung des Biegeelements verstellt wird, und da das Biegeelement in seiner Ruhekonfiguration eine geringe Höhe aufweisen kann, kann die erfindungsgemäße Verstellvorrichtung eine geringe Gesamthöhe, d.h. ein flaches Design aufweisen.

Bevorzugt ist das Biegeelement in Richtung einer Ruhekonfiguration vorgespannt, in welcher es keine Wölbung oder eine geringe Wölbung aufweist. Weiter bevorzugt ist das Biegeelement in der Ruhekonfiguration im Wesentlichen flach. Durch eine derartige Ausgestaltung wird die Gesamthöhe der Verstellvorrichtung verringert.

Weiter bevorzugt umfasst das Biegeelement ein Blech aus federelastischem Stahl oder ist aus Kunststoff gefertigt. Dadurch wird es möglich, die elastische Rückstellkraft des Blechs selbst einzusetzen, um das Biegeelement in eine Ruhekonfiguration vorzuspannen, die flach ist oder eine geringe Wölbung aufweist. Alternativ oder zusätzlich kann eine Spiralfeder oder können mehrere Spiralfedern mit dem Biegeelement gekoppelt sein, um die Vorspannung in Richtung der Ruhekonfiguration zu verstärken.

Erfindungsgemäß weist die Verstellvorrichtung Stützmittel auf, an welchen das Biegeelement verschiebbar angebracht ist. Dadurch wird es möglich, durch eine Kombination einer Verschiebung des Biegeelements entlang der Stützmittel mit einer Veränderung der Wölbung des Biegeelements eine Bahnkurve zu definieren, entlang derer die Seitenwange verstellt wird. Insbesondere kann dabei das Biegeelement im Gebrauch derart mit der Betätigungseinrichtung gekoppelt sein, dass, bei Ausüben einer Kraft durch die Betätigungseinrichtung auf das Biegeelement, das Biegeelement zunächst relativ zu den Stützmitteln verschoben wird, so dass die Betätigungseinrichtung sowohl zur Verschiebung des Biegeelements als auch zur Krümmung des Biegeelements eingesetzt werden kann.

Anschlagmittel können vorgesehen sein, um eine weitere Verschiebung des Biegeelements relativ zu den Stützmitteln zu verhindern, sobald das Biegeelement eine vorgegebene Position relativ zu den Stützmitteln erreicht hat. Dabei können die Stützmittel, das Biegeelement und die Anschlagmittel derart ausgestaltet sein, dass eine von der Betätigungseinrichtung ausgeübte Kraft zunächst zu einer Verschiebung des Biegeelements relativ zu den Stützmitteln bis zu der vorgegebenen Position führt, und eine anschließend weiter ausgeübte Kraft die Wölbung des Biegeelements verändert. Durch diese Ausgestaltung der Verstellvorrichtung wird es möglich, die Seitenwange gemäß einer Verstellkurve zu verstellen, welche ausgehend von einer Oberfläche des Sitzes zunächst einen im Wesentlichen geraden Abschnitt und anschließend einen Kurvenabschnitt aufweist.

Wenn das Biegeelement verschiebbar an den Stützmitteln angebracht ist, können Führungsmittel vorgesehen sein, um die Bewegungsbahn des Biegeelements relativ zu den Stützmitteln zu definieren. Insbesondere können die Führungsmittel eine an dem Biegeelement vorgesehen Führungsausnehmung umfassen, mit welcher sich ein an den Stützmitteln vorgesehener Führungsvorsprung in Eingriff befindet. Alternativ kann an den Stützmitteln eine Führungsausnehmung vorgesehen sein, mit welcher sich ein an dem Biegeelement vorgesehener Führungsvorsprung in Eingriff befindet.

Bevorzugt umfassen die Stützmittel einen Basisabschnitt und einen schwenkbar an diesem gelagerten Schwenkabschnitt. Die Stützmittel können insbesondere derart ausgestaltet sein, dass der Schwenkabschnitt bei Ausführen einer Schwenkbewegung relativ zu dem Basisabschnitt das Biegeelement berührt, um eine auf den Schwenkabschnitt wirkende Kraft auf das Biegeelement zu übertragen. Dies kann vorteilhaft sein, da die Betätigungseinrichtung nicht mehr direkt eine lokal große Kraft auf das Biegeelement ausübt, sondern die von der Betätigungseinrichtung ausgeübte Kraft über den Schwenkabschnitt auf das Biegeelement übertragen wird. Dadurch kann die an dem Biegeelement auftretende Belastung verringert werden. Bevorzugt ist im Gebrauch die Betätigungseinrichtung mit dem Schwenkabschnitt gekoppelt.

Die Verstellvorrichtung kann eine Betätigungseinrichtung umfassen, welche mit dem Biegeelement gekoppelt ist, um eine Kraft auf dieses auszuüben. Insbesondere kann die Betätigungseinrichtung einen Bowdenzug umfassen, dessen Hülle oder sonstiges Endstück mit dem Biegeelement und dessen Seil mit den Stützmitteln gekoppelt ist. Durch diese Ausgestaltung wird es möglich, auf eine einfache Weise das Biegeelement unter Verwendung der Betätigungseinrichtung sowohl bezüglich der Stützmittel zu verschieben als es auch zu krümmen.

Ein erfindungsgemäßer Sitz umfasst eine verstellbare Seitenwange und eine mit dieser gekoppelten Verstellvorrichtung nach einem Ausführungsbeispiel der Erfindung. Bevorzugt umfasst der Sitz zwei verstellbare Seitenwangen, von welchen jede mit jeweils einer Verstellvorrichtung nach einem Ausführungsbeispiel der vorliegenden Erfindung gekoppelt ist. Die verstellbare Seitenwange ist bevorzugt an einer Rückenlehne des Sitzes angeordnet. Weiter bevorzugt umfasst der Sitz eine mit der Verstellvorrichtung gekoppelte Betätigungseinrichtung, um eine Kraft auf diese auszuüben. Umfasst die Betätigungseinrichtung einen Bowdenzug, ist es insbesondere möglich, einen Aktuator der Betätigungseinrichtung, beispielsweise einen Elektromotor mit einer daran angebrachten Seilrolle oder Seilscheibe, räumlich von der Verstellvorrichtung zu trennen. Dies führt zu einer höheren Flexibilität hinsichtlich der Unterbringung des Aktuators an oder in dem Sitz.

Die Betätigungseinrichtung kann von einem Insassen des Fahrzeugs durch Betätigen eines entsprechenden Schalters aktiviert werden, welcher mit der Betätigungseinrichtung gekoppelt ist. Alternativ oder zusätzlich können mit der Betätigungseinrichtung gekoppelte Steuermittel zum Ansteuern der Betätigungseinrichtung sowie ein Sensor oder mehrere Sensoren vorgesehen sein, deren Ausgang mit den Steuermitteln gekoppelt ist. Insbesondere kann ein Beschleunigungssensor vorgesehen sein, dessen Ausgangssignal eine auf den Sitz wirkende Beschleunigung repräsentiert, so dass die Betätigungseinrichtung von den Steuermitteln in Abhängigkeit von der auf den Sitz wirkenden Beschleunigung angesteuert wird, um die Seitenwange entsprechend zu verstellen. Verschiedene andere Sensoren können ebenfalls eingesetzt werden, beispielsweise Sensoren zum Detektieren des Öffnens einer Fahrzeugtür.

Bei dem erfindungsgemäßen Sitz ist die Verstellvorrichtung bevorzugt derart an dem Sitz angeordnet und ausgestaltet, dass die Seitenwange gemäß einer Verstellkurve verstellt wird, welche ausgehend von einer Sitzoberfläche zunächst einen im Wesentlichen geraden Abschnitt und dann einen bezüglich des Sitzes nach innen verlaufenden Kurvenabschnitt umfasst. Somit wird es möglich, eine auf dem Sitz sitzende Person gleichsam von hinten zu umgreifen und einen verbesserten Seitenhalt für sie bereitzustellen.

Bei einem erfindungsgemäßen Verfahren zum Verstellen einer Seitenwange eines Sitzes wird die Seitenwange gemäß einer Verstellkurve verstellt, welche ausgehend von einer Sitzoberfläche des Sitzes zunächst einen geraden Abschnitt und anschließend einen bezüglich des Sitzes nach innen verlaufenden Kurvenabschnitt umfasst. Dabei ist die Kombination gerader Abschnitt/Kurvenabschnitt im Prinzip frei wählbar. Bevorzugt wird bei dem erfindungsgemäßen Verfahren die Seitenwange mit einer erfindungsgemäßen Verstellvorrichtung verstellt.

Die vorliegende Erfindung wird hauptsächlich bei Fahrzeugsitzen Verwendung finden, ist jedoch nicht auf diese beschränkt.

Die vorliegende Erfindung wird nachfolgend anhand bevorzugter Ausführungsbeispiele unter Bezugnahme auf die beigefügte Zeichnung näher erläutert.
Figur 1 veranschaulicht schematisch ein erfindungsgemäßes Verfahren zur Verstellung einer Seitenwange eines Sitzes.
Figur 2 zeigt schematisch eine Verstellvorrichtung für eine Seitenwange nach einem ersten Ausführungsbeispiel.
Figur 3 zeigt schematisch die Verstellvorrichtung von Fig. 2 in einer Seitenansicht zu verschiedenen Zeitpunkten während ihrer Betätigung.
Figur 4 zeigt schematisch eine Verstellvorrichtung für eine Seitenwange nach einem zweiten Ausführungsbeispiel.
Figur 5 ist eine Perspektivansicht der Verstellvorrichtung von Fig. 4.
Figur 6 zeigt schematisch die Verstellvorrichtung von Fig. 4 in einer Seitenansicht zu verschiedenen Zeitpunkten während ihrer Betätigung.
Figur 7 zeigt eine Verstellvorrichtung für eine Seitenwange nach einem dritten Ausführungsbeispiel in einer Perspektivansicht von oben.
Figur 8 zeigt die Verstellvorrichtung von Fig. 7 in einer Perspektivansicht von unten.
Figur 9 ist eine perspektivische Detailansicht der Verstellvorrichtung von Fig. 7.

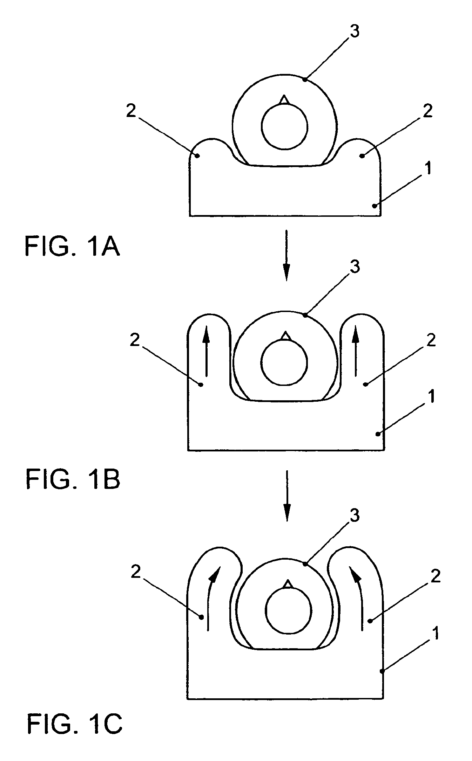

Unter Bezugnahme auf Figur 1 wird zunächst ein erfindungsgemäßes Verfahren zum Verstellen einer Seitenwange eines Sitzes erläutert. Figur 1 zeigt eine Ansicht einer Rückenlehne 1 eines Sitzes, beispielsweise eines Kraftfahrzeugsitzes, von oben zu verschiedenen Zeitpunkten während des Verfahrens zum Verstehen der Seitenwange. Der Rücken einer Person 3, welche auf dem Sitz sitzt, ist an die Rückenlehne 1 gelehnt. Durch Betätigen eines Schalters durch die Person 3 oder automatisch aufgrund der Ausgabe eines Sensors wird das Verfahren zum Verstellen der Rückenlehne eingeleitet. Figur 1A stellt schematisch eine Ausgangsposition von Seitenwangen 2 der Rückenlehne 1 dar, in welcher die Seitenwangen 2 nur mit einer verhältnismäßig geringen Höhe von der Rückenlehne hervorragen. Mit Hilfe einer unten detailliert erläuterten Verstellvorrichtung werden die Seitenwangen 2 bei dem erfindungsgemäßen Verfahren gemäß einer Bahnkurve verschoben, welche ausgehend von der Ausgangsposition von Figur 1A zunächst einen im Wesentlichen geradlinigen Abschnitt, der im Wesentlichen senkrecht zu der Oberfläche der Rückenlehne 1 verläuft, und anschließend einen in Richtung des Sitzinneren gebogenen Kurvenabschnitt aufweist (Figur 1B und 1C). Durch dieses Verfahren wird, wie aus Figur 1C ersichtlich ist, die Person 3 von den Seitenwangen 2 gleichsam von hinten umgriffen, so dass sie einen verbesserten Seitenhalt auf dem Sitz hat.

Die gleiche Wirkung kann auch mit einem geringfügig abgeänderten Verfahren erreicht werden, bei welchem die Seitenwangen entlang eines Kurvenabschnitts, z.B. eines Kreissegmentabschnitts, verstellt werden, dessen der Rückenlehne benachbarter Abschnitt im Wesentlichen senkrecht zu dieser verläuft.

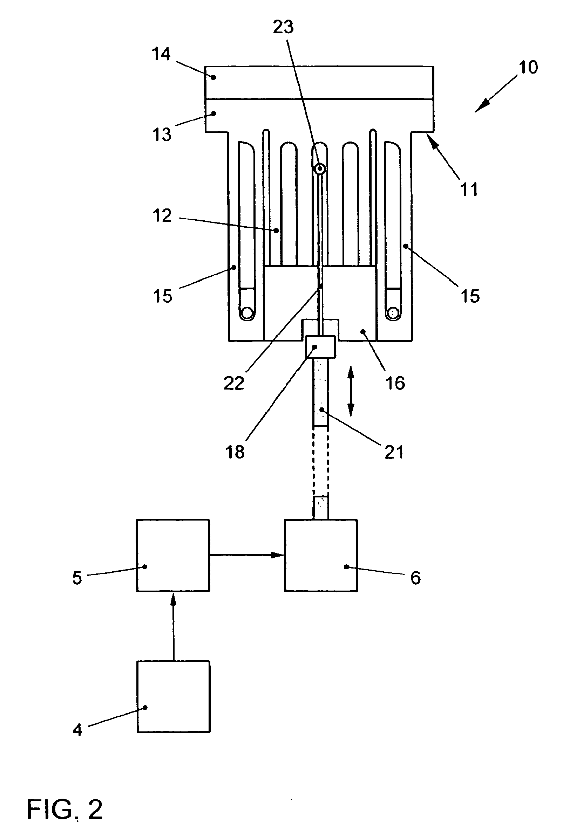

Im Folgenden werden unter Bezugnahme auf Figuren 2-9 verschiedene Ausführungsbeispiele einer erfindungsgemäßen Verstellvorrichtung für eine Seitenwange erläutert, mit welcher das in Fig. 1 dargestellten Verfahren ausgeführt werden kann.

Figur 2 zeigt ein erstes Ausführungsbeispiel einer erfindungsgemäßen Verstellvorrichtung 10, welche ein Biegeelement 11, im dargestellten Beispiel ein Blech aus federelastischem Stahl, und eine Halterung 16 zum Halten des Biegeelements umfasst. Das Biegeelement 11 kann aus jedem geeigneten Material mit Formgedächtnis hergestellt sein, z.B. aus federelastischem Stahl oder einem Kunststoff mit Formgedächtnis.

An einem in Figur 2 oben dargestellten Ende weist das Blech 11 einen verbreiterten Abschnitt 13 auf, an welchem ein Ansatz 14, z.B. aus Kunststoff, angebracht ist. Über den Ansatz 14 ist das Blech 11 im Gebrauch mit der Seitenwange des Sitzes gekoppelt, was beispielsweise dadurch erreicht werden kann, dass der Ansatz 14 gegen den Schaum der Seitenwange drückt. Ein mittlerer Abschnitt 12 des Blechs 11 1 weist mehrere schlitzförmige Ausnehmungen auf, um ein Biegen des Blechs 11 zu erleichtern. Ein in Figur 2 unten dargestellter Abschnitt des Blechs 11 ist verschiebbar an der Halterung 16 gelagert. Seitenabschnitte 15 des Blechs 11, welche eine Vorspannung des Blechs in Richtung einer Ruhekonfiguration mit geringer Wölbung unterstützen, können mittels schlitzförmiger Ausnehmungen und Bolzen 17 ebenfalls verschiebbar an der Halterung 16 angebracht sein, wobei die in Figur 2 unteren Enden der schlitzförmigen Ausnehmungen der Seitenabschnitte 15 zusammen mit den Bolzen 17 als Anschlag dienen, welcher eine weitere Verschiebung des Blechs 11 relativ zu der Halterung 16 verhindert, sobald die Bolzen 17 die unteren Enden der schlitzförmigen Ausnehmungen der Seitenabschnitte 15 berühren. Die Seitenabschnitte 15 können jedoch auch mittels der Bolzen 17 unbeweglich an der Halterung 16 angebracht sein, so dass nur der Mittelteil 12 des Blechs 11 relativ zu der Halterung 16 verschiebbar ist, wobei die von dem Abschnitt 13 des Blechs 11 beschriebene Bahnkurve durch das kombinierte Biegen und Verschieben des Mittelteils 12 bestimmt ist.

Die Wölbung des Blechs 11 wird mittels eines Bowdenzugs 21 verändert. Eine Bowdenzugaufnahme 18 nimmt ein Ende einer Hülle des Bowdenzugs 21 auf. Die Bowdenzugaufnahme 18 ist mit dem in Fig. 2 unteren Abschnitt des mittleren Teils 12 des Blechs gekoppelt. Ein Ende eines Seils 22 des Bowdenzugs ist mit dem mittleren Teil 12 des Blechs gekoppelt, wobei eine Befestigung 23 für das Ende des Bowdenzugseils bevorzugt an einem Abschnitt des Mittelteils 12 in der Nähe des verbreiterten Abschnitts 13 angeordnet ist. Die mit dem Blech 11 gekoppelte Bowdenzugaufnahme 18 erfüllt gleichzeitig die Funktion eines Schiebers, welcher bei einer Verkürzung einer freien Länge des Seils 22 des Bowdenzugs 21 den Mittelteil 12 des Blechs in Fig. 2 nach oben schiebt. Bei dem dargestellten Ausführungsbeispiel ist an der Halterung 16 eine Ausnehmung vorgesehen, in welche die Bowdenzugaufnahme 18 bei einer Betätigung der Verstellvorrichtung einfährt.

Die freie Länge des Seils 22 wird mittels eines geeigneten Aktuators 6, beispielsweise eines Elektromotors mit einer daran gekoppelten Seilscheibe, an welcher das in Fig. 2 untere Ende des Seils 22 befestigt ist, eingestellt. In Fig. 2 wird der Aktuator 6 von Steuermitteln 5 in Abhängigkeit von einem Ausgangssignal eines Sensors 4 angesteuert. Der Sensor 4 ist beispielsweise ein geeigneter Sensor zum Detektieren des Öffnens einer Fahrzeugtür oder der Betätigung einer Zündung, oder ein Beschleunigungssensor, welcher seitlich auf den Sitz wirkende Kräfte detektiert.

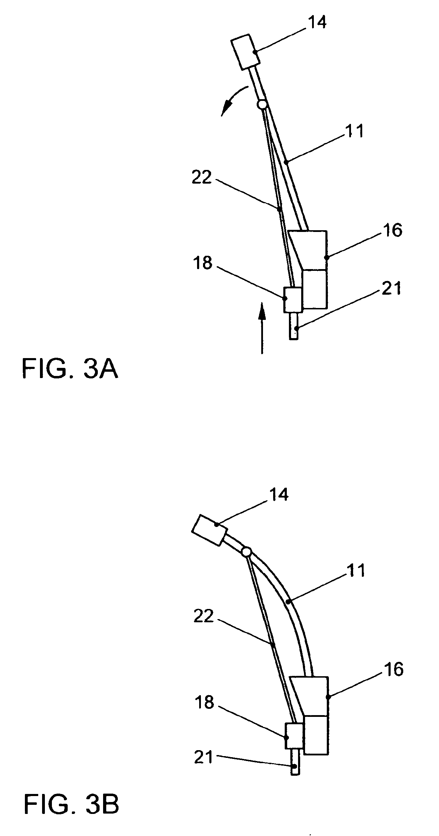

Figur 3 zeigt schematisch die Funktionsweise der Verstellvorrichtung von Figur 2. Figur 3A zeigt eine Ruhekonfiguration, in welcher das Blech 11 im Wesentlichen flach ist. Bei einer Verkürzung der freien Länge des Seils 22 des Bowdenzugs bewegt sich die mit dem Blech 11 gekoppelte Bowdenzugaufnahme 18 in Figur 3 nach oben, wie schematisch durch einen Pfeil dargestellt ist. Gleichzeitig wird durch die Verkürzung der freien Länge des Seils 22 das Blech 11 gekrümmt, wie ebenfalls durch einen Pfeil dargestellt ist, und erreicht die Konfiguration von Figur 3B, in welcher das Blech eine endliche Wölbung aufweist. Die resultierende Bewegung des oberen Endes 13 des Blechs 11 entlang einer gekrümmten Bahnkurve wird über den Ansatz 14 auf die Seitenwange des Sitzes übertragen, welche sich somit ebenfalls entlang einer entsprechend gekrümmten Bahnkurve bewegt.

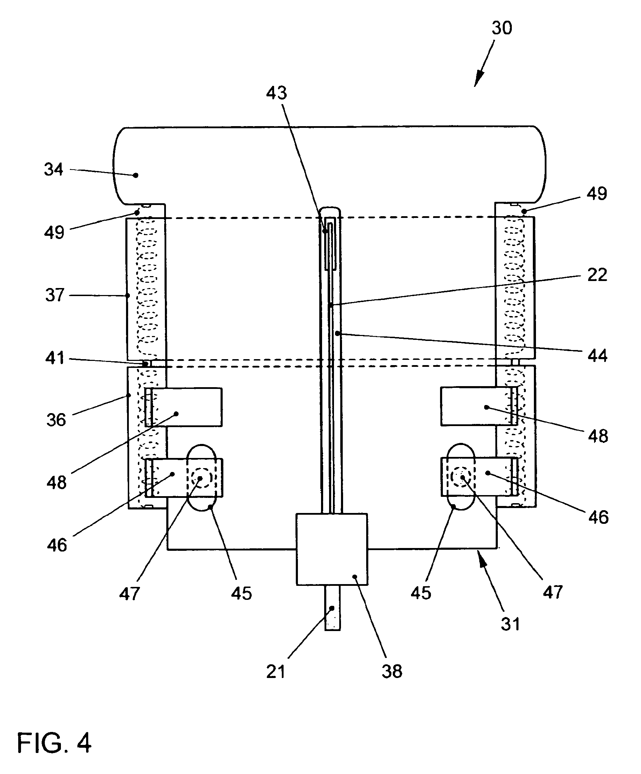

Unter Bezugnahme auf Figur 4-6 wird als nächstes ein zweites Ausführungsbeispiel einer erfindungsgemäßen Verstellvorrichtung 30 erläutert. Die Verstellvorrichtung 30 umfasst ein Biegeelement 31, dessen Wölbung durch Ausüben einer Kraft verändert werden kann, sowie Stützmittel für das Biegeelement. Das Biegeelement 31 kann, wie in der Figur dargestellt, wiederum ein Blech aus federelastischem Stahl sein, kann jedoch auch aus jedem anderen geeigneten Material mit einem Formgedächtnis hergestellt sein, beispielsweise aus einem Kunststoffmaterial mit Formgedächtnis. Das Blech 31 weist an einem in Figur 4 oben dargestellten Ende einen verbreiterten Abschnitt 34 auf, welcher im Gebrauch mit der Seitenwange gekoppelt ist, um diese zu verstellen. Eine zentrale schlitzförmige Ausnehmung 44 in dem Blech 31 dient als Durchführung für das Seil 22 des Bowdenzugs 21 und erleichtert darüber hinaus ein Biegen des Blechs 31. Weitere schlitzförmige Ausnehmungen, wie sie beispielsweise in Figur 2 gezeigt sind, können auch bei dem Ausführungsbeispiel von Figur 4 vorgesehen sein.

Die Halterung für das Blech 31 ist bei diesem Ausführungsbeispiel zweiteilig ausgebildet und umfasst einen Basisabschnitt 36 und einen Schwenkabschnitt 37, der mittels eines Gelenks 41 schwenkbar an dem Basisabschnitt 36 gelagert ist. Von dem Basisabschnitt 36 hervorragende Halteklammern 46, 48 greifen seitlich über einen Abschnitt des Blechs 31, um dieses an dem Basisabschnitt 36 der Halterung zu sichern. Während bei dem in Figur 4 dargestellten Ausführungsbeispiel vier Halteklammern dargestellt sind, kann deren Anzahl verändert werden, solange sichergestellt ist, dass das Blech 31 sicher von der Halterung gehalten wird. Die Halteklammern sind derart ausgestaltet, dass das Blech 31 relativ zu dem Basisabschnitt 36 und dem Schwenkabschnitt 37 verschiebbar bleibt. Um das Blech 31 bei einer Verschiebung relativ zu der Halterung zu führen, greifen von den Halteklammern 46 hervorragende Führungsstifte 47 in schlitzförmig ausgebildete Führungsausnehmungen 45 ein, welche in dem Blech 31 ausgebildet sind.

Eine Bowdenzugaufnahme 38 ist fest mit einem in Figur 4 unten dargestellten Ende des Blechs 31 gekoppelt und dient zum Einhängen einer Hülle des Bowdenzugs 21. im Gegensatz zu dem in Figur 2 dargestellten Ausführungsbeispiel ist bei dem in Figur 4 dargestellten Ausführungsbeispiel ein Ende des Seils 22 des Bowdenzugs nicht direkt an dem Blech 31, sondern an einem durch die schlitzförmige Ausnehmung 44 hervorragenden Vorsprung 43 des Schwenkabschnitts 37 befestigt. Somit wird von dem Seilende des Bowdenzugs keine Kraft mehr auf das Blech 31 ausgeübt, sondern die von dem Seilende des Bowdenzugs ausgeübte Kraft wird über den Schwenkabschnitt 37 auf das Blech 31 übertragen, um dessen Wölbung zu verändern, wie unten detaillierter beschrieben werden wird.

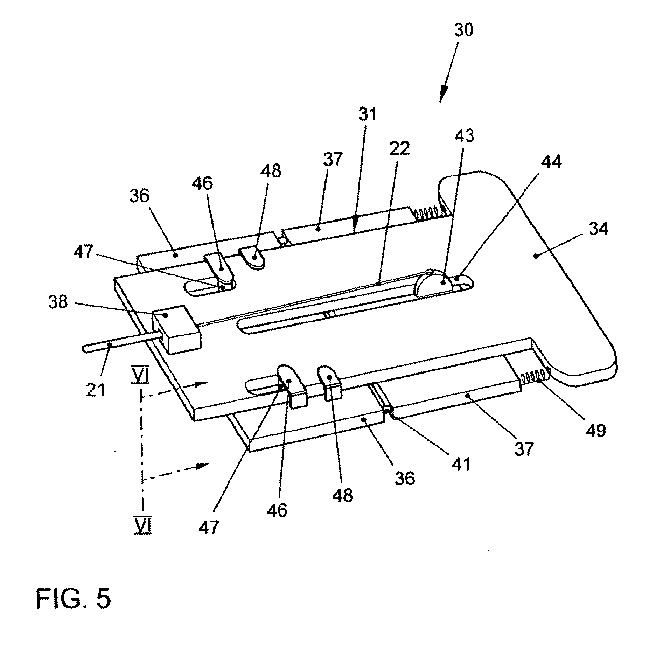

Wie am besten in der Perspektivansicht von Figur 5 ersichtlich ist, ist das Blech 31 in der dargestellten Ruhekonfiguration im Wesentlichen flach oder weist nur eine geringe Wölbung auf. Das Blech 31 - oder allgemeiner das Biegeelement der Verstellvorrichtung - ist derart ausgestaltet, dass es in Richtung der Ruhekonfiguration vorgespannt ist, in welcher es eine geringe Wölbung aufweist. Zur Erhöhung der Rückstellkraft in die Ruhekonfiguration sind bei dem Ausführungsbeispiel von Figur 4-6 Spiralfedern 49 vorgesehen, deren eines Ende an dem verbreiterten Abschnitt 34 des Blechs 31 angebracht ist, während ihr anderes Ende an dem Basisabschnitt 36 der Halterung befestigt ist. Die Anzahl und Federkonstanten der Spiralfedern 49 wird geeignet in Abhängigkeit von den elastischen Eigenschaften des Blechs 31 gewählt, um eine hinreichende Rückstellkraft für das Blech 31 in seine Ruhekonfiguration mit geringer Wölbung sicherzustellen.

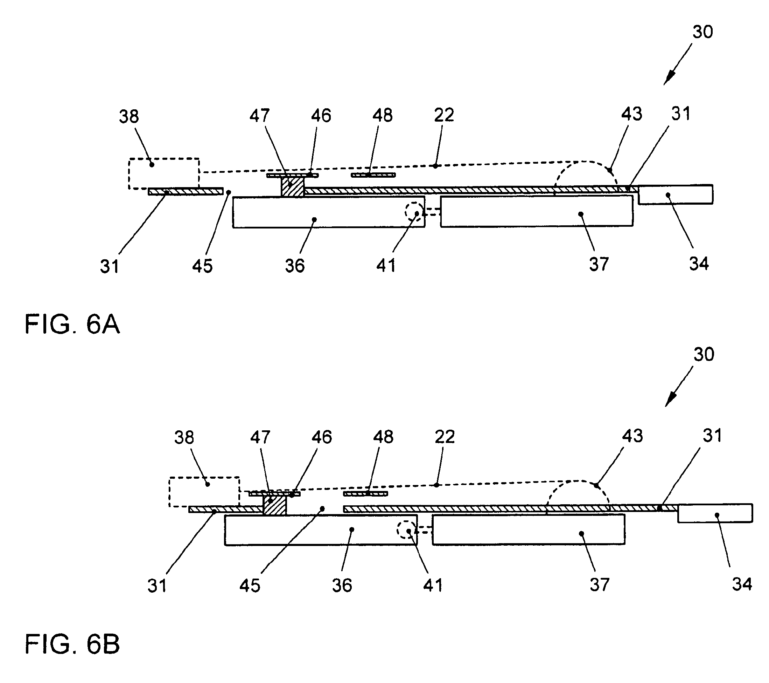

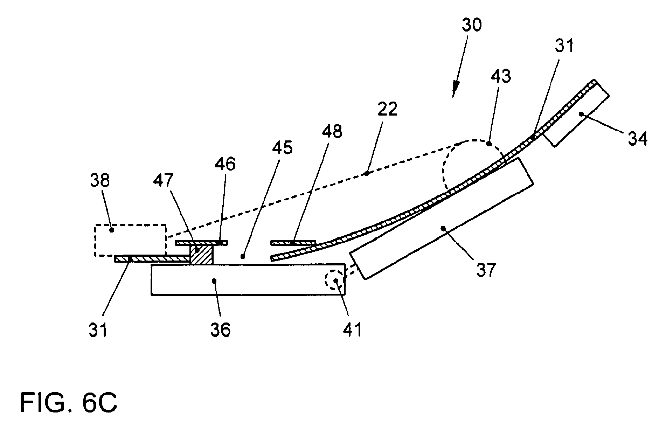

Anhand von Figur 6 wird als nächstes die Funktionsweise der in Figur 4 und 5 dargestellten Verstellvorrichtung erläutert. Figur 6A-C zeigt die Verstellvorrichtung in einer Querschnittsansicht entlang der Linie VI-VI in Fig. 5 während verschiedener Phasen des Betriebs. Die Bowdenzugaufnahme 38, das Seil 22 des Bowdenzugs und der zur Befestigung des Seils dienende Vorsprung 43 des Schwenkabschnitts 37 sind zum besseren Verständnis ebenfalls gestrichelt dargestellt. Bei der in Figur 6A dargestellten Ausgangsstellung befindet sich das Blech 31 in der Ruhekonfiguration, in welcher es im Wesentlichen flach ist, wobei der Führungsstift 47 an einem in Figur 6A rechten Ende der Führungsausnehmung 45 anliegt, oder sich in der Nähe dieses Endes befindet. Wird ausgehend von dieser Ausgangsposition eine freie Länge des Seils 22 des Bowdenzugs verkürzt, übt die mit dem Blech 31 verbundene Bowdenzugaufnahme 38 auf das Blech 31 eine nach rechts gerichtete Kraft aus, so dass das Blech 31 relativ zu dem Basisabschnitt 36 und dem Schwenkabschnitt 37 der Halterung nach rechts verschoben wird, wobei die Länge der Verschiebungsstrecke im Wesentlichen durch die Länge der Führungsausnehmung 45 in dem Blech 31 bestimmt ist. Sobald das Blech 31 die in Figur 6B dargestellte Position relativ zu der Halterung erreicht hat, in welcher der Führungsstift 47 das linke Ende der Führungsausnehmung 45 berührt, kann das Blech 31 nicht weiter nach rechts verschoben werden. Eine weiter auf das Seil 22 des Bowdenzugs ausgeübte Kraft wird über den Vorsprung 43 zum Schwenkabschnitt 37 übertragen, welcher unter Wirkung dieser Kraft in Richtung des Blechs 31 schwenkt. Bei dieser Schwenkbewegung relativ zu dem Basisabschnitt 36 berührt der Schenkabschnitt 37 das Blech 31 und krümmt dieses in eine Konfiguration mit einer größeren Wölbung, wie sie schematisch in Figur 6C dargestellt ist. Der Abschnitt 34 des Blechs 31, welcher mit der Seitenwange gekoppelt ist, bewegt sich während des in Figur 6 dargestellten Bewegungsablaufs entlang einer Bahnkurve, welche zunächst im Wesentlichen geradlinig verläuft und, sobald der Schwenkabschnitt 37 relativ zu dem Basisabschnitt 36 geschwenkt wird, gekrümmt ist. Die Bewegung entlang dieser Bahnkurve wird entsprechend auf die Seitenwange übertragen, so dass mit Hilfe der Verstellvorrichtung das in Figur 1 schematisch dargestellte Verfahren zum Verstellen einer Seitenwange durchgeführt werden kann.

Es sollte beachtet werden, dass, während in Figur 6 der Betrieb der Verstellvorrichtung derart dargestellt ist, dass der Schwenkabschnitt 37 erst dann relativ zu dem Basisabschnitt 36 zu schwenken beginnt, wenn die Verschiebung des Blechs 31 beendet ist, die Verschiebung und die Krümmung des Blechs 31 auch wenigstens teilweise gleichzeitig stattfinden können, wenn die Verstellvorrichtung derart ausgestaltet ist, dass der Schwenkabschnitt 37 bereits dann relativ zu dem Basisabschnitt 36 zu schwenken beginnt, wenn das Blech 31 um eine gewisse Entfernung relativ zu dem Basisabschnitt 36 verschoben worden ist.

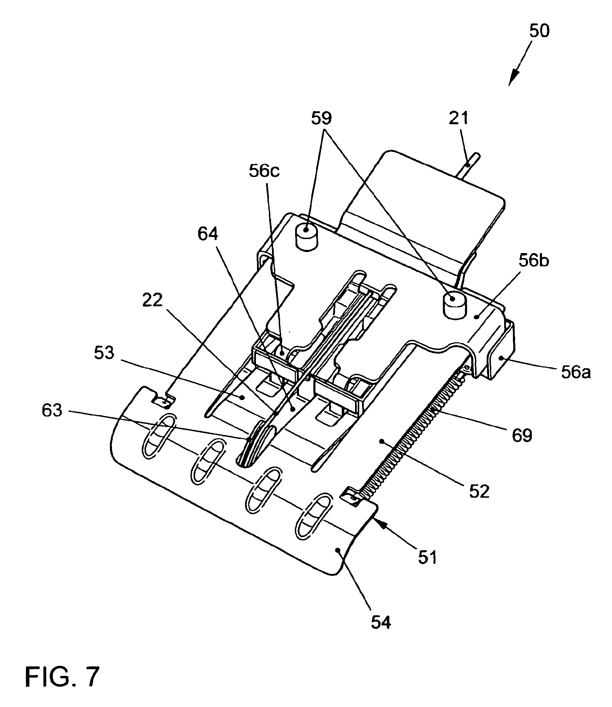

Figuren 7-9 zeigen ein drittes Ausführungsbeispiel einer erfindungsgemäßen Verstellvorrichtung, welches dem unter Bezugnahme auf Figuren 4-6 beschriebenen zweiten Ausführungsbeispiel ähnlich ist. Ein Biegeelement 51, welches bei dem dargestellten Beispiel wiederum ein Blech aus federelastischem Stahl ist, weist einen verbreiterten Abschnitt 54 auf, welcher im Gebrauch mit der Seitenwange des Sitzes gekoppelt ist. Durch längliche schlitzförmige Ausnehmungen sind Seitenabschnitte 52, welche in der in Figur 7 dargestellten Ruhekonfiguration im Wesentlichen in einer Ebene verlaufen, von mittleren Abschnitten 53 des Blechs 51 getrennt, welche auch in der Ruhekonfiguration eine endliche Wölbung aufweisen, um beispielsweise ein Biegen des Blechs in der gewünschten Richtung zu erleichtern.

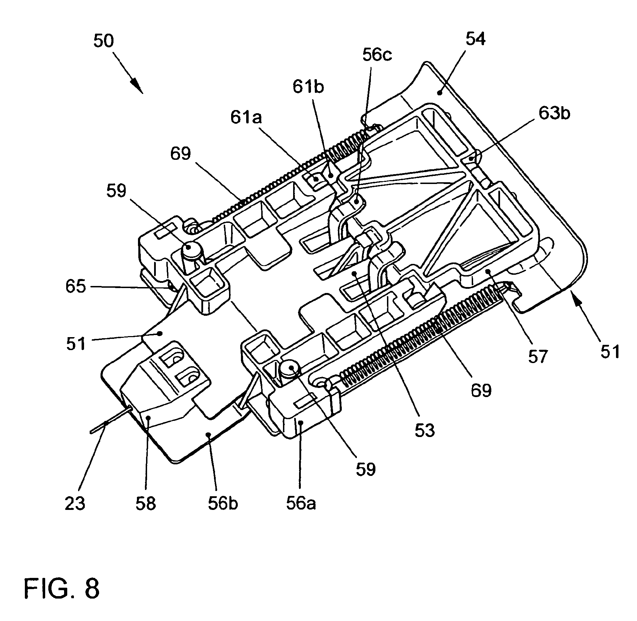

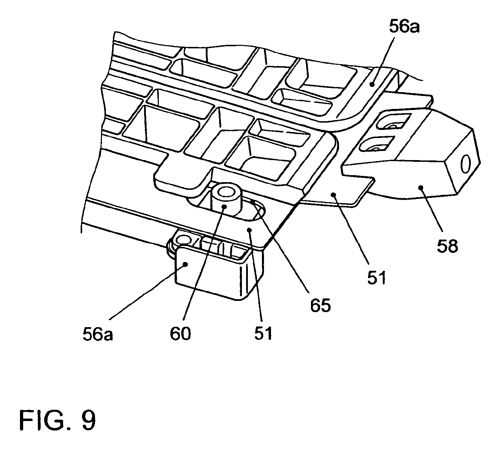

Eine Halterung für das Blech 51 umfasst einen Basisabschnitt 56 sowie einen schwenkbar daran gelagerten Schwenkabschnitt 57. Im Gegensatz zu dem in Figur 4 dargestellten Ausführungsbeispiel ist in Figur 7 der Basisabschnitt 56 aus einem ersten Basisabschnitt 56a und einem zweiten Basisabschnitt 56b ausgebildet, an welchem U-förmige Halteabschnitte 56c vorgesehen sind, welche durch Ausnehmungen in dem Blech 51 und dem ersten Basisabschnitt 56a positioniert sind, um mitzuhelfen, den Schwenkabschnitt 57 an dem ersten Basisabschnitt 56a zu arretieren, wie am besten in der unteren Perspektivansicht von Figur 8 ersichtlich ist. Der zweite Basisabschnitt 56b ist durch durch entsprechende Durchführungen 60 eingeführte Bolzen 59 an dem ersten Basisabschnitt 56a befestigt. Wie am besten in der unvollständigen Perspektivansicht von Figur 9 ersichtlich ist, dienen die Durchführungen 60 zusammen mit korrespondierenden Führungsausnehmungen 65 des Blechs 51 als Führungsmittel, welche eine Bewegung des Blechs bei einer Verschiebung relativ zu der von dem Basisabschnitt 56 und dem Schwenkabschnitt 57 ausgebildeten Halterung führen. Spiralfedern 69, deren eines Ende an dem verbreiterten Abschnitt 54 des Blechs 51 und deren anderes Ende an dem ersten Basisabschnitt 56a angebracht ist, dienen wiederum dazu, die Vorspannung des Blechs in Richtung der in Figur 7 und 8 dargestellten Ruhekonfiguration zu vergrößern. Die gelenkige Lagerung des Schwenkabschnitts 57 an dem Basisabschnitt 56 wird durch von dem Schwenkabschnitt 57 hervorragende zylinderförmige Ansätze 61 a realisiert, welche drehbar in korrespondierenden Ausnehmungen 61 b des ersten Basisabschnitts 56a angeordnet sind.

Eine Bowdenzugaufnahme 58 ist fest mit dem Blech 51 gekoppelt. Ein Ende des Seils 22 des Bowdenzugs 21 wird über einen Vorsprung 63 des Schwenkabschnitts 57 geführt, welcher durch eine mittlere Ausnehmung 64 des Blechs 51 hervorragt, und ist mit einer Befestigung 63B an dem Schwenkabschnitt 57 arretiert.

Die Funktionsweise der in Figur 7-9 dargestellten Verstellvorrichtung entspricht derjenigen der Verstellvorrichtung nach dem zweiten Ausführungsbeispiel, wie sie in Figur 6 schematisch dargestellt ist.

Wie aus der vorhergehenden Beschreibung verschiedener Ausführungsbeispiele erfindungsgemäßer Verstellvorrichtungen ersichtlich ist, dienen die in den Figuren 2-9 dargestellten Verstellvorrichtungen 10, 30 und 50 dazu, eine Verstellung einer Seitenwange gemäß einer Bahnkurve, wie sie in Figur 1 schematisch dargestellt ist, zu realisieren. Dazu wird im Gebrauch ein Abschnitt des Biegeelements der Verstellvorrichtung mit der Seitenwange des Sitzes gekoppelt, während die Halterung an dem Lehnenrahmen befestigt wird. Bei den Ausführungsbeispielen von Figur 4 und von Figur 7, bei welchen die Halterung aus einem Basisabschnitt und einem daran schwenkbar gelagerten Schwenkabschnitt aufgebaut ist, wird der Basisabschnitt an dem Lehnenrahmen befestigt. Das in den Figuren nicht dargestellte andere Ende des Seils dies Bowdenzugs ist an einem geeigneten Aktuator, beispielsweise einem Elektromotor mit daran angebrachter Seilrolle, befestigt. Der Aktuator kann an einer beliebigen geeigneten Stelle an oder in dem Sitz angeordnet sein, beispielsweise in der Rückenlehne.

Während bei den oben detailliert dargestellten Ausführungsbeispielen ein Bowdenzug verwendet wurde, kann die Betätigungseinrichtung jede andere geeignete Einrichtung sein, welche eine Zug- oder Schubkraft auf das Biegeelement ausüben kann, um dieses zu krümmen, beispielsweise eine Zahnstange, welche mit einem Ritzel angetrieben wird.

Eine Betätigung der Verstellvorrichtungen und somit ein Verstellen der Seitenwangen des Sitzes kann auf verschiedene Weisen initiiert werden. Beispielsweise kann die Betätigungseinrichtung direkt von der auf dem Sitz sitzenden Person angesteuert werden, indem diese durch Betätigen eines Schalters die erfindungsgemäße Verstellvorrichtung aktiviert. Alternativ oder zusätzlich kann die Verstellvorrichtung auch durch Steuermittel, beispielsweise einem Mikrocomputer angesteuert werden, welche mit einem oder mehreren Sensoren gekoppelt sind, um die Seitenwangen beispielsweise in Abhängigkeit davon zu verstellen, ob eine Person auf dem Sitz sitzt, ob ein Motor des Fahrzeugs angestellt ist, ob eine Tür des Fahrzeugs geöffnet ist oder ob die Seitenwangen die auf dem Sitz sitzende Person bereits kontaktieren. Im letzteren Fall können insbesondere Drucksensoren in die Seitenwangen integriert sein, oder die Position der Seitenwangen relativ zu der Person kann über einen in der Betätigungseinrichtung fließenden Strom, beispielsweise den einem Elektromotor zugeführte Strom, überwacht werden.

Bevorzugt sind an einer Rückenlehne des Fahrzeugsitzes zwei verstellbare Seitenwangen und dementsprechend zwei ihnen zugeordnete erfindungsgemäße Verstellvorrichtungen vorgesehen, welche mit einer einzelnen Betätigungseinrichtung betätigt werden können.

Mögliche Anwendung der erfindungsgemäßen Verstellvorrichtung sind jedoch nicht auf die eben beschriebenen Anwendungen beschränkt, sondern umfassen beispielsweise auch die so genannte aktive Lehnenbreitenverstellung, bei welcher wahlweise die linke oder die rechte Seitenwange einer Rückenlehne in Abhängigkeit von einem Fahrverhalten des Fahrzeugs verstellt wird, beispielsweise in Abhängigkeit von einer seitlich auf das Fahrzeug wirkenden Beschleunigung. Insbesondere kann während des Durchfahrens einer Kurve wahlweise die linke oder die rechte Seitenwange mit der erfindungsgemäßen Verstellvorrichtung verstellt werden, um der auf dem Sitz sitzenden Person einen verbesserten Halt gegen die auf sie wirkende Zentrifugalkraft zu bieten.

Das erfindungsgemäße Verfahren zum Verstellen von Seitenwangen eines Sitzes und die erfindungsgemäße Verstellvorrichtung für eine Seitenwange ist nicht auf eine Anwendung bei an einer Rückenlehne vorgesehenen Seitenwangen beschränkt. Vielmehr können das erfindungsgemäße Verfahren und die erfindungsgemäße Verstellvorrichtung ebenso bei Sitzwangen oder bei Kopfstützen eines Sitzes Anwendung finden. Die vorliegende Erfindung kann bei beliebigen Sitzen eingesetzt werden, insbesondere bei Fahrzeugsitzen, ist jedoch nicht auf letztere beschränkt.

## Patentansprüche

1. Verstellvorrichtung für eine Seitenwange (2) eines Sitzes, umfassend
ein mit der Seitenwange (2) zu koppelndes Biegeelement (11; 31; 51), dessen Wölbung durch Ausüben einer Kraft auf das Biegeelement (11; 31; 51) reversibel änderbar ist, um die Seitenwange (2) in Abhängigkeit von der Wölbung des Biegeelements (11; 31; 51) zu verstellen,
wobei das Biegeelement (11; 31; 51) mit einer Betätigungseinrichtung (6, 21, 22) zum Ausüben einer Kraft auf das Biegeelement (11; 31; 51) zu koppeln ist, um die Wölbung des Biegeelements (11; 31; 51) einzustellen,
**gekennzeichnet durch**
Stützmittel (16; 36, 37; 56a-56c, 57) zum Halten des Biegeelements (11; 31; 51), wobei das Biegeelement (11; 31; 51) verschiebbar an den Stützmitteln (16; 36, 37; 56a-56c, 57) angebracht ist.

2. Verstellvorrichtung nach Anspruch 1,
**dadurch gekennzeichnet,**
**dass** das Biegeelement (11; 31; 51) in Richtung einer Ruhekonfiguration vorgespannt ist, in welcher es keine Wölbung oder eine geringe Wölbung aufweist.

3. Verstellvorrichtung nach Anspruch 1 oder 2,
**dadurch gekennzeichnet,**
**dass** das Biegeelement (11; 31; 51) in der Ruhekonfiguration im Wesentlichen flach ist.

4. Verstellvorrichtung nach einem der Ansprüche 1-3,
**dadurch gekennzeichnet,**
**dass** das Biegeelement (11; 31; 51) ein Blech (11; 31; 51) aus federelastischem Stahl umfasst oder aus Kunststoff gefertigt ist.

5. Verstellvorrichtung nach einem der vorhergehenden Ansprüche,
**dadurch gekennzeichnet,**
**dass** das Biegeelement (11; 31; 51) derart mit der Betätigungseinrichtung (6, 21, 22) zu koppeln ist, dass bei Ausüben einer Kraft auf das Biegeelement (11; 31; 51) das Biegeelement relativ zu den Stützmitteln (16; 36, 37; 56a-56c, 57) verschoben wird.

6. Verstellvorrichtung nach einem der vorhergehenden Ansprüche,
**gekennzeichnet durch**
Anschlagmittel (17; 45, 47; 59, 60, 65) zum Verhindern einer weiteren Verschiebung des Biegeelements (11 31; 51) relativ zu den Stützmitteln (16; 36, 37; 56a-56c, 57), wenn sich das Biegeelement (11; 31; 51) in einer vorgegebenen Position relativ zu den Stützmitteln (16; 36; 37; 56a-56c; 57) befindet.

7. Verstellvorrichtung nach Anspruch 6,
**dadurch gekennzeichnet,**
**dass** die Stützmittel (16; 36, 37; 56a-56c, 57) und das Biegeelement (11; 31; 51) derart ausgestaltet sind, dass das Biegeelement (11; 31; 51), wenn es sich in der vorgegebenen Position befindet, durch weiteres Ausüben einer Kraft gekrümmt wird.

8. Verstellvorrichtung nach einem der vorhergehenden Ansprüche,
**gekennzeichnet durch**
eine an dem Biegeelement (31; 51) vorgesehene Führungsausnehmung (45; 65), mit welcher sich ein an den Stützmitteln (16; 36; 37; 56a-56c; 57) vorgesehener Führundsvorsprung (47; 59, 60) in Eingriff befindet.

9. Verstellvorrichtung nach einem der vorhergehenden Ansprüche,
**dadurch gekennzeichnet,**
**dass** die Stützmittel (16; 36; 37; 56a-56c; 57) einen Basisabschnitt (36; 56a-56c) und einen schwenkbar an diesem gelagerten Schwenkabschnitt (37; 57) umfassen,
wobei die Stützmittel (16; 36; 37; 56a-56c; 57) derart ausgestaltet sind, dass der Schwenkabschnitt (37; 57) bei Ausführen einer Schwenkbewegung relativ zu dem Basisabschnitt (36; 56a-56c)
das Biegeelement (31; 51) berührt, um eine auf den Schwenkabschnitt (37; 57) wirkende Kraft auf das Biegeelement (31; 51) zu übertragen.

10. Verstellvorrichtung nach Anspruch 9,
**dadurch gekennzeichnet,**
**dass** die Betätigungseinrichtung (22) mit dem Schwenkabschnitt (37; 57) zu koppeln ist, um eine von der Betätigungseinrichtung (22) ausgeübte Kraft über den Schwenkabschnitt (37; 57) zu dem Biegeelement (31; 51) zu übertragen.

11. Verstellvorrichtung nach einem der vorhergehenden Ansprüche,
**gekennzeichnet durch**
eine mit dem Biegeelement (11; 31; 51) gekoppelte Betätigungseinrichtung (6, 21, 22) zum Ausüben einer Kraft auf das Biegeelement (11; 31; 51).

12. Verstellvorrichtung nach Anspruch 11,
**dadurch gekennzeichnet,**
**dass** die Betätigungseinrichtung (6; 21; 22) einen Bowdenzug (21) umfasst, und
**dass** eine Hülle des Bowdenzugs (21) mit dem Biegeelement (31; 51) und ein Seil (22) des Bowdenzugs (21) mit zum Stützen des Biegeelements (31; 51) vorgesehenen Stützmitteln (37; 57) gekoppelt ist.

13. Sitz, umfassend
eine verstellbare Seitenwange (2), und
eine Verstellvorrichtung (10; 30; 50) nach einem der Ansprüche 1-12, welche mit der verstellbaren Seitenwange (2) gekoppelt ist, um diese zu verstellen.

14. Sitz nach Anspruch 13,
**dadurch gekennzeichnet,**
**dass** der Sitz eine weitere verstellbare Seitenwange (2) und eine weitere Verstellvorrichtung (10; 30; 50) nach einem der Ansprüche 1-12 aufweist, welche mit der weiteren verstellbaren Seitenwange (2) gekoppelt ist, wobei die Seitenwange (2) und die weitere Seitenwange (2) symmetrisch an dem Sitz angeordnet sind.

15. Sitz nach Anspruch 13 oder 14,
**dadurch gekennzeichnet,**
**dass** die verstellbare Seitenwange (2) an einer Rückenlehne des Sitzes angeordnet ist.

16. Sitz nach einem der Ansprüche 13-15,
**gekennzeichnet durch**
eine mit der Verstellvorrichtung (10; 30; 50) gekoppeltes Betätigungseinrichtung (6, 21, 22) zum Ausüben einer Kraft auf das Biegeelement (31; 51), um die Wölbung des Biegeelements (31; 51) zu verstellen.

17. Sitz nach Anspruch 16,
**gekennzeichnet durch**
einen Beschleunigungssensor (4), und
mit dem Beschleunigungssensor (4) und der Betätigungseinrichtung (6) gekoppelte Steuermittel (5) zum Ansteuern der Betätigungseinrichtung (6) in Abhängigkeit von einem Ausgangssignal des Beschleunigungssensors (4).

18. Sitz nach einem der Ansprüche 13-17,
**dadurch gekennzeichnet,**
**dass** die Verstellvorrichtung (10; 30; 50) derart an dem Sitz angeordnet und ausgestaltet ist, dass die Seitenwange (2) gemäß einer Verstellkurve verstellt wird, welche ausgehend von einer Sitzoberfläche des Sitzes zunächst einen im Wesentlichen geraden Abschnitt und dann einen bezüglich des Sitzes nach innen verlaufenden Kurvenabschnitt umfasst.

19. Verfahren zum Verstellen einer Seitenwange (2) eines Sitzes,
wobei die Seitenwange (2) gemäß einer Verstellkurve verstellt wird, welche ausgehend von der Sitzoberfläche des Sitzes zunächst einen geraden Abschnitt und anschließend einen bezüglich des Sitzes nach innen verlaufenden Kurvenabschnitt umfasst.

20. Verfahren nach Anspruch 19,
wobei die Seitenwange (2) in Abhängigkeit von einer auf ein Fahrzeug wirkenden Beschleunigung verstellt wird.

21. Verfahren nach Anspruch 19 oder 20,
**dadurch gekennzeichnet,**
**dass** die Seitenwange (2) mit einer Verstellvorrichtung nach einem der Ansprüche 1-12 verstellt wird.

## Claims

1. Adjusting device for a side cheek (2) of a seat, comprising
a bending element (11; 31; 51) which is to be coupled to the side cheek (2) and the curvature of which can be reversibly changed by exerting a force on the bending element (11; 31; 51) in order to adjust the side cheek (2) in dependence on the curvature of the bending element (11; 31; 51),
wherein the bending element (11; 31; 51) is to be coupled to an actuating device (6, 21, 22) for exerting a force on the bending element (11; 31; 51) in order to adjust the curvature of the bending element (11; 31; 51),
**characterised by**
supporting means (16; 36, 37; 56a-56c, 57) for holding the bending element (11; 31; 51), the bending element (11; 31; 51) being displaceably attached to the supporting means (16; 36, 37; 56a-56c, 57).

2. Adjusting device according to Claim 1,
**characterised**
**in that** the bending element (11; 31; 51) is biased towards a rest configuration in which it has no curvature or little curvature.

3. Adjusting device according to Claim 1 or 2,
**characterised**
**in that** the bending element (11; 31; 51) is substantially flat in the rest configuration.

4. Adjusting device according to any one of Claims 1-3,
**characterised**
**in that** the bending element (11; 31; 51) comprises a plate (11; 31; 51) made of resilient steel or is produced from plastic.

5. Adjusting device according to any one of the preceding Claims,
**characterised**
**in that** the bending element (11; 31; 51) is to be coupled to the actuating device (6, 21, 22) in such a way that, when a force is exerted on the bending element (11; 31; 51), the bending element is displaced relative to the supporting means (16; 36, 37; 56a-56c, 57).

6. Adjusting device according to any one of the preceding Claims,
**characterised by**
stop means (17; 45, 47; 59, 60, 65) for preventing further displacement of the bending element (11; 31; 51) relative to the supporting means (16; 36, 37; 56a-56c, 57) if the bending element (11; 31; 51) is situated in a preset position relative to the supporting means (16; 36, 37; 56a-56c, 57).

7. Adjusting device according to Claim 6,
**characterised**
**in that** the supporting means (16; 36, 37; 56a-56c, 57) and the bending element (11; 31; 51) are configured in such a way that the bending element (11; 31; 51), if it is situated in the preset position, is bent by further exertion of a force.

8. Adjusting device according to any one of the preceding Claims,
**characterised by**
a guide recess (45; 65) which is provided on the bending element (31; 51) and with which a guide projection (47; 59, 60) provided on the supporting means (16; 36, 37; 56a-56c, 57) engages.

9. Adjusting device according to any one of the preceding Claims,
**characterised**
**in that** the supporting means (16; 36, 37; 56a-56c, 57) comprise a base section (36; 56a-56c) and a pivoting section (37; 57) pivotably mounted thereon,
the supporting means (16; 36, 37; 56a-56c, 57) being configured in such a way that the pivoting section (37; 57), when performing a pivoting movement relative to the base section (36; 56a-56c), contacts the bending element (31; 51) in order to transmit a force, acting on the pivoting section (37; 57), to the bending element (31; 51).

10. Adjusting device according to Claim 9,
**characterised**
**in that** the actuating device (22) is to be coupled to the pivoting section (37; 57) in order to transmit a force, exerted by the actuating device (22), to the bending element (31; 51) via the pivoting section (37; 57).

11. Adjusting device according to any one of the preceding Claims,
**characterised by**
an actuating device (6, 21, 22) which is coupled to the bending element (11; 31; 51) and serves to exert a force on the bending element (11; 31; 51).

12. Adjusting device according to Claim 11,
**characterised**
**in that** the actuating device (6; 21; 22) comprises a Bowden cable (21), and
**in that** a sheath of the Bowden cable (21) is coupled to the bending element (31; 51) and a wire (22) of the Bowden cable (21) is coupled to supporting means (37; 57) provided for supporting the bending element (31; 51).

13. Seat, comprising
an adjustable side cheek (2), and
an adjusting device (10; 30; 50) according to any one of Claims 1-12 which is coupled to the adjustable side cheek (2) in order to adjust the latter.

14. Seat according to Claim 13,
**characterised**
**in that** the seat has a further adjustable side cheek (2) and a further adjusting device (10; 30; 50) according to one of Claims 1-12 which is coupled to the further adjustable side cheek (2), the side cheek (2) and the further side cheek (2) being arranged symmetrically on the seat.

15. Seat according to Claim 13 or 14,
**characterised**
**in that** the adjustable side cheek (2) is arranged on a backrest of the seat.

16. Seat according to any one of Claims 13-15,
**characterised by**
an actuating device (6, 21, 22) which is coupled to the adjusting device (10; 30; 50) and serves to exert a force on the bending element (31; 51) in order to adjust the curvature of the bending element (31; 51).

17. Seat according to Claim 16,
**characterised by**
an acceleration sensor (4) and
control means (5) which are coupled to the acceleration sensor (4) and the actuating device (6) and serve to control the actuating device (6) in dependence on an output signal of the acceleration sensor (4).

18. Seat according to any one of Claims 13-17,
**characterised**
**in that** the adjusting device (10; 30; 50) is arranged on the seat and configured in such a way that the side cheek (2) is adjusted according to an adjusting curve which, starting from a seat surface of the seat, first comprises a substantially straight section and then a curved section running inwards with respect to the seat.

19. Method for adjusting a side cheek (2) of a seat,
in which the side cheek (2) is adjusted according to an adjusting curve which, starting from the seat surface of the seat, first comprises a straight section and then a curved section running inwards with respect to the seat.

20. Method according to Claim 19,
in which the side cheek (2) is adjusted in dependence on an acceleration acting on a vehicle.

21. Method according to Claim 19 or 20,
**characterised**
**in that** the side cheek (2) is adjusted by an adjusting device according to any one of Claims 1-12.

## Revendications

1. Dispositif de réglage d'une joue latérale (2) d'un siège,
comprenant
un élément de flexion (11 ; 31 ; 51) à coupler avec la joue latérale (2), dont la courbure peut être modifiée de manière réversible par l'exercice d'une force sur l'élément de flexion (11 ; 31 ; 51), pour déplacer la joue latérale (2) en fonction de la courbure de l'élément de flexion (11 ; 31 ; 51),
l'élément de flexion (11 ; 31 ; 51) devant être couplé à un dispositif d'actionnement (6, 21, 22) servant à exercer une force sur l'élément de flexion (11 ; 31 ; 51) pour régler la courbure de l'élément de flexion (11 ; 31 ; 51),
**caractérisé par**
des moyens de support (16 ; 36, 37 ; 56a-56c, 57) servant à maintenir l'élément de flexion (11 ; 31 ; 51), l'élément de flexion (11 ; 31 ; 51) étant monté de manière mobile au niveau des moyens de support (16 ; 36, 37 ; 56a-56c, 57).

2. Dispositif de réglage selon la revendication 1,
**caractérisé en ce**
**que** l'élément de flexion (11 ; 31 ; 51) est précontraint dans la direction d'une configuration de repos, dans laquelle il ne présente pas de courbure ou une faible courbure.

3. Dispositif de réglage selon la revendication 1 ou 2,
**caractérisé en ce**
**que** l'élément de flexion (11 ; 31 ; 51) est essentiellement plat dans la configuration de repos.

4. Dispositif de réglage selon l'une quelconque des revendications 1 à 3,
**caractérisé en ce**
**que** l'élément de flexion (11 ; 31 ; 51) comporte une tôle (11 ; 31 ; 51) en acier ressort ou est réalisé en matière plastique.

5. Dispositif de réglage selon l'une quelconque des revendications précédentes,
**caractérisé en ce**
**que** l'élément de flexion (11 ; 31 ; 51) doit être couplé au dispositif d'actionnement (6, 21, 22) de telle sorte que lorsque l'on exerce une force sur l'élément de flexion (11 ; 31 ; 51), l'élément de flexion se décale par rapport aux moyens de support (16 ; 36, 37 ; 56a-56c, 57).

6. Dispositif de réglage selon l'une quelconque des revendications précédentes,
**caractérisé par**
des moyens de butée (17 ; 45, 47 ; 59, 60, 65) servant à éviter un déplacement supplémentaire de l'élément de flexion (11 ; 31 ; 51) par rapport aux moyens de support (16 ; 36, 37 ; 56a-56c, 57), lorsque l'élément de flexion (11 ; 31 ; 51) se trouve dans une position prédéfinie par rapport aux moyens de support (16 ; 36 ; 37 ; 56a-56c ; 57).

7. Dispositif de réglage selon la revendication 6,
**caractérisé en ce**
**que** les moyens de support (16 ; 36, 37 ; 56a-56c, 57) et l'élément de flexion (11 ; 31 ; 51) sont réalisés de telle sorte que lorsque l'élément de flexion (11 ; 31 ; 51) se trouve dans la position prédéfinie, il est déformé par la poursuite de l'exercice d'une force.

8. Dispositif de réglage selon l'une quelconque des revendications précédentes,
**caractérisé par**
un évidement de guidage (45 ; 65) prévu au niveau de l'élément de flexion (31 ; 51), avec lequel une saillie de guidage (47 ; 59, 60) prévue au niveau des moyens de support (16 ; 36 ; 37 ; 56a-56c ; 57) est en prise.

9. Dispositif de réglage selon l'une quelconque des revendications précédentes,
**caractérisé en ce**
**que** les moyens de support (16 ; 36 ; 37 ; 56a-56c ; 57) comportent une section de base (36a ; 56a-56c) et une section pivotante (37 ; 57) logée de manière pivotante au niveau de celle-ci,
les moyens de support (16 ; 36 ; 37 ; 56a-56c ; 57) étant réalisés de telle sorte que lors de la réalisation d' un mouvement de pivotement par rapport à la section de base (36 ; 56a-56c), la section pivotante (37 ; 57) touche l'élément de flexion (31 ; 51) pour transmettre une force agissant sur la section pivotante (37 ; 57) à l'élément de flexion (31 ; 51).

10. Dispositif de réglage selon la revendication 9,
**caractérisé en ce**
**que** le dispositif d'actionnement (22) doit être couplé à la section pivotante (37 ; 57) pour transmettre une force exercée par le dispositif d'actionnement (22) à l'élément de flexion (31 ; 51) par le biais de la section pivotante (37 ; 57).

11. Dispositif de réglage selon l'une quelconque des revendications précédentes,
**caractérisé par**
un dispositif d'actionnement (6, 21, 22) couplé à l'élément de flexion (11 ; 31 ; 51) servant à exercer une force sur l'élément de flexion (11 ; 31 ; 51).

12. Dispositif de réglage selon la revendication 11,
**caractérisé en ce**
**que** le dispositif d'actionnement (6 ; 21 ; 22) comprend un câble Bowden (21), et
**qu'**une gaine du câble Bowden (21) est couplée à l'élément de flexion (31 ; 51) et un câble (22) du câble Bowden (21) est couplé aux moyens de support (37 ; 57) prévus pour soutenir l'élément de flexion (31 ; 51).

13. Siège, comprenant
une joue latérale réglable (2), et
un dispositif de réglage (10 ; 30 ; 50) selon l'une quelconque des revendications 1 à 12, qui est couplé à la joue latérale réglable (2) pour régler cette dernière.

14. Siège selon la revendication 13,
**caractérisé en ce**
**que** le siège présente une autre joue latérale réglable (2) et un autre dispositif de réglage (10 ; 30 ; 50) selon l'une quelconque des revendications 1 à 12, lequel est couplé à l'autre joue latérale réglable (2), la joue latérale (2) et l'autre joue latérale (2) étant disposées de façon symétrique au niveau du siège.

15. Siège selon la revendication 13 ou 14,
**caractérisé en ce**
**que** la joue latérale réglable (2) est disposée au niveau d'un dossier du siège.

16. Siège selon l'une quelconque des revendications 13 à 15,
**caractérisé par**
un dispositif d'actionnement (6, 21, 22) couplé au dispositif de réglage (10 ; 30 ; 50) servant à exercer une force sur l'élément de flexion (31 ; 51) pour régler la courbure de l'élément de flexion (31 ; 51).

17. Siège selon la revendication 16,
**caractérisé par**
un capteur d'accélération (4), et
des moyens de commande (5), couplés au capteur d'accélération (4) et au dispositif d'actionnement (6), servant à commander le dispositif d'actionnement (6) en fonction d'un signal de sortie du capteur d'accélération (4).

18. Siège selon l'une quelconque des revendications 13 à 17,
**caractérisé en ce**
**que** le dispositif de réglage (10 ; 30 ; 50) est disposé et réalisé au niveau du siège de telle sorte que la joue latérale (2) est réglée selon une courbe de réglage, qui, en partant d'une surface du siège, comporte d'abord une section essentiellement rectiligne et ensuite une section courbe s'étendant vers l'intérieur par rapport au siège.

19. Procédé de réglage d'une joue latérale (2) d'un siège,
la joue latérale (2) étant réglée selon une courbe de réglage, qui, en partant de la surface du siège, comporte d'abord une section rectiligne et ensuite une section courbe s'étendant vers l'intérieur par rapport au siège.

20. Procédé selon la revendication 19,
la joue latérale (2) étant réglée en fonction d'une accélération agissant sur un véhicule.

21. Procédé selon la revendication 19 ou 20,
**caractérisé en ce**
**que** la joue latérale (2) est réglée avec un dispositif de réglage selon l'une quelconque des revendications 1 à 12.
